# EUROPEAN PATENT SPECIFICATION

(11) **EP 1 319 609 B1**
(45) Date of publication and mention of the grant of the patent: **02.03.2005**
(21) Application number: 02027478.3
(22) Date of filing: 10.12.2002
(51) Int. Cl.: B65D 88/12, B60P 1/64

(54) **Load carrier and load carrier system**
Lastenträger
Porte-charges

(30) Priority: 14.12.2001 SE 0104231
(43) Date of publication of application: 18.06.2003
(73) Proprietor: Bogg, Anders, 792 22 Mora (SE)
(72) Inventor: Bogg, Anders, 792 22 Mora (SE)
(74) Representative: Svanfeldt, Hans-Ake

(56) References cited:
- WO-A-93/18934
- DE-A- 3 809 871
- GB-A- 2 274 645
- US-A- 5 795 123

## Description

The present invention relates to a load carrier of roll-on type and a method of transfer-loading a load carrier of roll-on type from a self-loading vehicle to a railroad carriage, and in particular to a load carrier and method that enables better use of load capabilities for transport of load carrier of roll-on type by railroad.

### Background of the Invention

Today, containers, pallets and the like of roll-on type (hereafter referred to as load carriers of roll-on type) are widely used for transportation of loads with self-loading road-transport vehicles (e.g. trucks, trailers and the like). Swedish industry standard SMS 3021 and German standard DIN 30722 are two standards that define requirements on such roll-on load carriers. Examples of self-loading devices and load carriers for such devices are further disclosed in US3819075, US3892323, US 4132325 and US5290138.

This type of cargo handling systems have many advantages, as they permit multifunctional use of trucks, as the same truck may be used for transport of many different types of loads just by changing the load carrier, e.g. a container type load carrier may be used for transport of gravel or waste material, or a platform type load carrier may be used for transport of smaller vehicles or portable houses. A standard truck-trailer combination is normally adapted to carry one load carrier of roll-on type on the truck and one or two on the trailer.

As these existing systems are mainly intended for transportation on public roads, they are submitted to dimension restrictions due to regulations defining the maximum dimensions (width, length and height) for such vehicles. As a consequence typical load carriers of roll-on type used in Sweden (EU) has a width of 2.4 to 2.6 m and a length of 4.5 to 7 m, and the existing self-loading devices for vehicles are consequently adapted to handle load carriers of this size.

However, due to economical and environmental reasons, many long distance transportations are preferably performed by railroad. Therefore systems have been developed for transferring load carriers of roll-on type from a truck to a railway-carriage. This transfer may either be performed by a crane or the like or by utilizing the self-loading mechanism on the truck. Crane based transfer, limits the transfer to transfer-stations equipped with a crane or the use of a mobile crane. Transfer by utilizing the self-loading mechanism on the truck may either be performed in the longitudinal direction of the carriage or from a transverse direction. Longitudinal transfer may be performed at special transfer stations where the truck is made access to the end of the carriage, whereby the self-loading mechanism pushes the load carrier onto the carriage along the longitudinal axis. Transverse transfer may be performed onto special carriages equipped with turntables for rotating the load carrier into the longitudinal direction after the load carrier is transferred from the truck to the turntable on the carriage.

As both these transfer systems require specially adapted transfer sites and/or complex special equipment, they limit the use of railroad transport of load carriers of roll-on type. Furthermore, the maximum width for transportation by railway is much larger than the width of the load carriers adapted for transportation on public roads, whereby a large percent of the railroad carriage load-capacity is not used.

WO 93/18934 disclose a load carrying system including a primary rack (load carrier) onto which secondary (smaller) racks can be mounted. The primary rack is adapted for transport using a primary (large) vehicle, and the secondary racks are adapted for transport using a secondary (small) vehicle. The secondary racks are loaded onto (removed from) the primary rack by a self loading mechanism on the secondary vehicle, while the primary rack is not loaded onto a primary vehicle. The secondary racks may either be adapted for longitudinal or transverse transport on the primary rack. Furthermore WO 93/18934 disclose an alternative embodiment of the secondary rack, which has a telescopic rear portion that enables transport of standard 10 foot ISO containers on the rack.

SE 7603304-2 disclose a system for transferring specially designed containers from a load carrying vehicle to a railroad carriage.

### Summary of the Invention

The object of the invention is to provide a new load carrier of roll-on type, and a new method of transfer-loading a load carrier of roll-on type from a self-loading vehicle to a railroad carriage, which load carrier and method overcomes one or more drawbacks of the prior art. This is achieved by the load carrier of roll-on type as defined in claim land by the method as defined in claim 3.

One advantage with such a load carrier of roll-on type is that it is possible to transport in a transverse direction on a railroad carriage, while still being fully compatible with existing self-loading vehicles. The transverse orientation makes it possible to use the maximum allowed width for railroad transports, and thus a larger percent of the railroad carriage load-capacity is used

The main advantage with the method of transfer-loading a load carrier of roll-on type from a self-loading vehicle to a railroad carriage is that the loading procedure is extremely fast and simple, and it may further be performed at very simple transfer-stations. Due to this, the method will create substantial cost savings for transfer of load carriers from road vehicles to railroad. Therefore a greater number of transports may be performed by railroad, and a positive environmental effect may be achieved.

Embodiments of the invention are defined in the dependent claims.

### Brief Description of the Drawings

The invention will be described in detail below with reference to the drawings, in which
Fig. 1 shows a side view of a conventional load carrier of roll-on type.
Fig. 2 shows a side view of a load carrier of roll-on type according to an embodiment of the invention, which load carrier is loaded on a railroad carriage.
Fig. 3 shows a front view of a load carrier of roll-on type according to an embodiment of the invention.
Figs. 4a - 4d show the steps in a transfer-loading procedure according to the invention

### Detailed Description of Preferred Embodiments

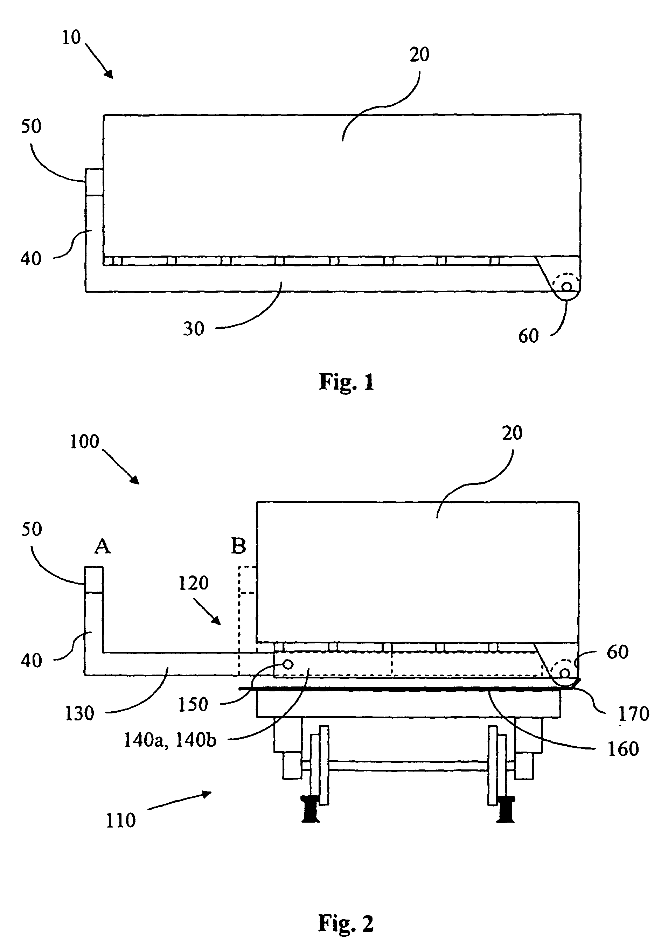

Fig. 1 shows a side view of a conventional load carrier of roll-on type 10. The load carrier 10 has a load carrying structure 20, which in this case basically is in the form of a lidless box with one or more doors at the rear or on the sides. As mentioned above the load carrying structure 20 may be of any suitable form, as is well known in the art. The load carrying structure 20 is arranged on a frame 30, which at the front end has a vertical portion 40 that includes gripping means 50 for the self-loading device. The load carrier 10 further is equipped with rolls 60 at the lower rear end, which support the load carrier during loading and unloading. As mentioned above, a load carrier of this type may be 4.5 to 7 m long and 2.4 to 2.6 m wide, so that it is acceptable for transport on public roads. A long load carrier further lowers the angle by which the load carrier is tilted during loading/unloading from ground level, which may be of great importance in a large number of situations.

The same reference numbers will be used for corresponding elements throughout the following description of preferred embodiments.

Fig. 2 shows a side view of a load carrier of roll-on type 100 according to a first embodiment of the present invention. The load carrier 100 is shown loaded on a railroad carriage 110. In this embodiment the load-carrying structure 20 is substantially shorter, compared with the conventional load carrier 10, whereas the width is in the same range. The length of the shortened load-carrying structure 20 is preferably adapted to the maximum width for transport by railroad, whereby it is possible to transport the load carrier 100 transversely on a railway carriage 110. But, as such shortened load carriers are subjected to non-acceptable tilting angles during loading/unloading, the load carrier 100 is provided with a frame 120 comprising a sub-frame 130 that is extendable with respect to the front end of the load carrying structure. The vertical portion 40 comprising the gripping means 50 for the self-loading mechanism is arranged on the distal end of the sub-frame 130. The load carrier 100 comprises rolls 60 like the conventional load carrier 10, but other friction lowering support means may be applicable.

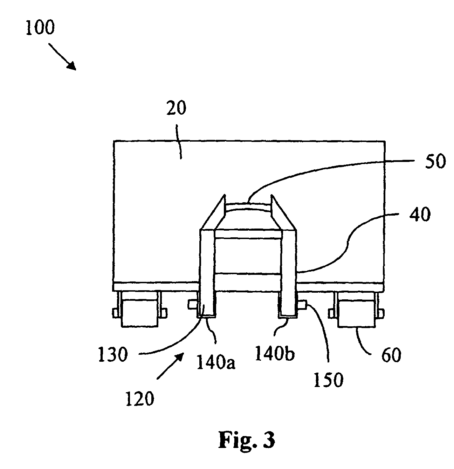

In this particular embodiment the frame 120 is basically formed of two frame elements 140a, 140b with a rectangular cross-section (fig. 3) that extend substantially the full length of the load-carrying structure 20, and of the sub-frame 130. The sub-frame 130 is telescopically arranged with respect to the two rectangular frame elements 140a, 140b. The frame 120 further comprises sub-frame securing means 150 in the form of pin-bolts, for securing the sub-frame, with respect to the frame and the load carrying structure, in at least one extended state A and one fully retracted state B. The dashed lines in fig. 2 shows the sub frame in the fully retracted state B.

Obviously the sub-frame securing means 150 may be of any suitable form, and in an advanced embodiment they are remotely actuated by actuator means such as a mechanical linkage, electromagnetic devices, air pressure devices or hydraulic devices.

In the extended state A the load carrier 100 can be handled as a conventional load carrier 10 by normal length self-loading vehicles, while, as mentioned, the load carrier 100 in the retracted state B may be transported in a transverse orientation on railroad.

As mentioned several times above, the load carrier 100 according to the invention is primarily adapted for transverse transport by railroad, but it may obviously be used in any situation where different restrictions regarding dimensions exist.

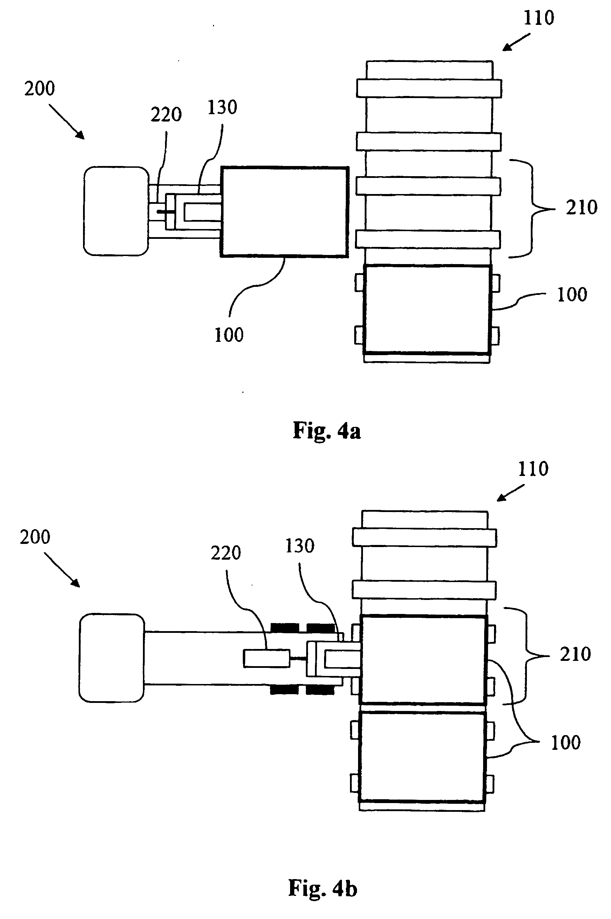

An especially advantageous feature of the load carrier 100 is that standard open railway carriages 110 can be used for carrying load carriers of this type. However, to achieve optimum loading characteristics guiding means 160 are arranged on the railway carriages 110 for guiding the load carriers 110 during transfer-loading. In one embodiment, shown in figs. 2, 4a - 4d, the guiding means 160 are formed as u-shaped tracks of a width that matches the rolls 60 at the lower rear end of the load carrier 100, and they are arranged in pairs at a distance that corresponds to the distance between the rolls 60. Each such pair of guiding means 160 or any corresponding structure is hereafter referred to as a load carrier-receiving position 180 on the railroad carriage.

Preferably, the guiding means 160 are formed such that they provide stoppers 170 for the rolls 60 at the end of their extension, which stoppers 170 stops the load carrier when it has reached the correct position. Obviously the stoppers may act on other parts of the load carrier 100 and/or be formed separately from the guiding means 160. A conventional railroad carriage 110 is suitably arranged to accommodate two or more transversely arranged load carriers 100 of roll-on type according to the present invention. To obtain maximum usage of the load capacity of the railroad carriages 110, the load carriers 100 are arranged side by side without any substantial space there between on carriages 110 of a suitable length. In an alternative embodiment the guiding means 160 may be formed of guide rolls that act on the frame

The present invention further relates to a railroad transport system that utilizes transversely arranged load carriers of roll-on type presented above. Such a system may lead to more efficient use of the railroad for transports with roll on type load carriers and to substantial cost savings.

One special feature with such a railroad transport system is that it provides extremely simple transfer-loading, which may be performed at virtually any transfer facility. Basically the requirements on such a transfer facility is that the self-loading vehicle carrying the load carrier may be able to position in a transverse direction with respect to the railroad carriage, with the back end of the vehicle adjacent to an empty load carrier-receiving position on the railroad carriage, and with the load carrier located at the same level or higher. These requirements may, be met by a flat access surface or a simple ramp adjacent to the railroad tracks.

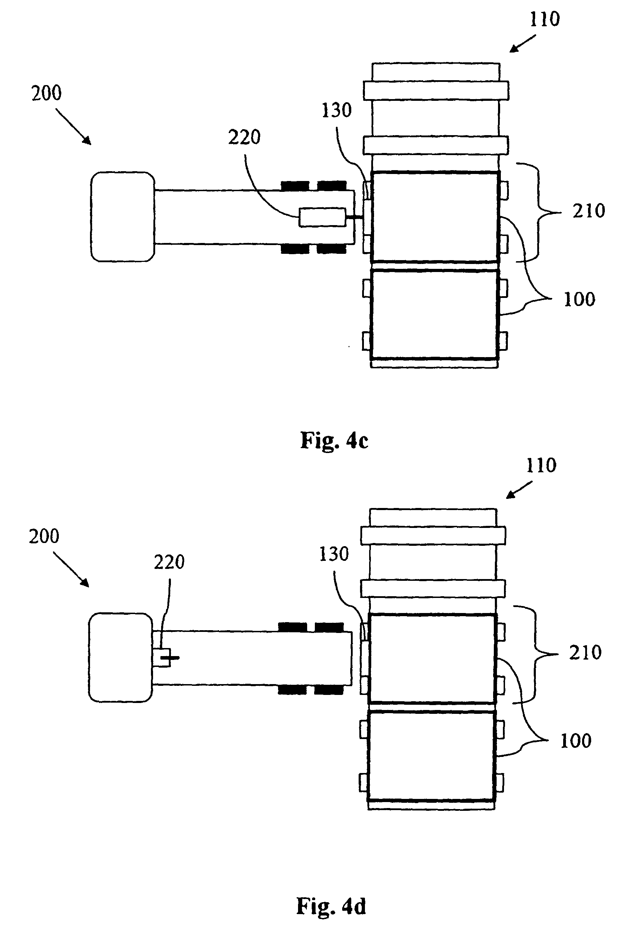

A more specific description of one preferred method of transfer-loading a load carrier of roll-on type from a self-loading vehicle to a railroad carriage, may therefore comprise the steps:
- Positioning (fig. 4a) the self-loading vehicle 200, carrying a load carrier of roll-on type 10, 100, in a transverse direction with respect to the railroad carriage 110, and with the back end of the vehicle 200 adjacent to an empty load carrier-receiving position 210 on the railroad carriage 110,
- Pushing (fig. 4b), with the self-loading mechanism 220 of the vehicle 200, the load carrier from the self-loading vehicle 200 to the load carrier-receiving position 210 on the railroad carriage 110,
- Releasing (fig. 4d) the self-loading mechanism 210 from the load carrier 10, 100, and
- Securing the load carrier 10, 100 in the transverse direction with respect to the railroad carriage 110.

The above embodiment of the method is applicable for transfer-loading any load carrier of roll-on type 10, 100 with a length equal to or less than the maximum width for transportation by railway, and if a load carrier 100 of the type presented above is used, the method comprises the additional steps:
- Unlocking the sub-frame securing means 150,
- Pushing (fig. 4c), with the self-loading mechanism 210 of the vehicle 200, the sub-frame 130 to the retracted state B, and
- locking the sub-frame securing means 150.

Naturally transfer-loading from railroad carriage 110 to a self-loading vehicle 200 is performed in the reverse order.

## Claims

1. Load carrier of roll-on type (100), comprising a load carrying structure (20) and a frame (120) with gripping means (50) at the front end, the gripping means (50) and the frame (120) being adapted to enable loading of the load carrier (100) with a self-loading vehicle comprising sub-frame securing means (150) for securing the sub-frame (130) with respect to the frame (120) and the load carrying structure (20), in at least one extended state (A) and one fully retracted state (B), **characterized in that** the gripping means (50) are arranged on a sub-frame (130) that is extendable with respect to the front end of the load carrying structure (20).

2. Load carrier (100) according to claim 1 **characterized in that** the total length of the load carrier (100) with the sub-frame in the extended state (A) being in a range that allows that the load carrier (100) can be handled by normal length self-loading vehicles and exceeding the maximum width for transportation by railway, and the total length of the load carrier (100) with the sub-frame in the retracted state (B) is equal to or less than the maximum width for transportation by railway.

3. Method of transfer-loading a load carrier (100) of roll-on type according to claim 2, from a self-loading vehicle (200) to a railroad carriage (110), comprising the steps
positioning the self-loading vehicle (200), carrying a load carrier (100) of roll-on type, in a transverse direction with respect to the railroad carriage (110), and with the back end of the vehicle adjacent to an empty load carrier-receiving position (210) on the railroad carriage (110),
pushing, with the self-loading mechanism (220) of the vehicle (200), the load carrier (100) from the self-loading vehicle (200) to the load carrier-receiving position (220) on the railroad carriage (110), and
releasing the self-loading mechanism (220) from the load carrier (100), securing the load carrier (100) in the transverse direction with respect to the railroad carriage (110),
unlocking the sub-frame securing means (150),
pushing, with the self-loading mechanism (220), the sub-frame (130) to the retracted state (B), and
locking the sub-frame securing means (150).

## Patentansprüche

1. Lastträger des Roll-on-Typs (100), umfassend einen lasttragenden Aufbau (20) und einen Rahmen (120) mit einer Greifeinrichtung (50) am Vorderende, wobei die Greifeinrichtung (50) und der Rahmen (120) dazu geeignet sind, das Beladen des Lastträgers (100) mit einem selbstladenden Fahrzeug zu ermöglichen, ferner umfassend Nebenrahmensicherungseinrichtungen (150) zum Sichern eines Nebenrahmens (130) in Bezug auf den Rahmen (120) und des lasttragenden Aufbaus (20) in wenigstens einem ausgefahrenen Zustand (A) und einem vollständig eingefahrenen Zustand (B), **dadurch gekennzeichnet, dass** die Greifeinrichtung (50) auf dem Nebenrahmen (130) angeordnet ist, der in Bezug auf das Vorderende des lasttragenden Aufbaus (20) ausfahrbar ist.

2. Lastträger (100) nach Anspruch 1, **dadurch gekennzeichnet, dass** die gesamte Länge des Lastträgers (100) mit dem Nebenrahmen im ausgefahrenen Zustand (A) in einem Bereich liegt, der es erlaubt, dass der Lastträger (100) durch selbstladende Fahrzeuge mit normaler Länge gehandhabt werden kann und die maximale Breite zum Transport auf der Schiene überschreitet, und dass die gesamte Länge des Lastträgers (100) mit dem Nebenrahmen im eingefahrenen Zustand (B) gleich der oder weniger als die der maximalen Breite zum Transport auf der Schiene ist.

3. Verfahren der Transferbeladung eines Lastträgers (100) des Roll-on-Typs gemäß Anspruch 2, von einem selbstladenden Fahrzeug (200) auf einen Eisenbahnwaggon (110), umfassend die Schritte Positionieren des selbstladenden Fahrzeugs (200), das einen Lastträger (100) des Roll-on-Typs trägt, in einer Querrichtung in Bezug auf den Eisenbahnwaggon (110) und mit dem Hinterende des Fahrzeugs benachbart einer leeren Lastträgeraufnahmeposition (210) auf dem Eisenbahnwaggon (110) ,
Schieben des Lastträgers (100) mit dem Selbstlademechanismus (220) des Fahrzeugs (200) von dem selbstladenden Fahrzeug (200) in die Lastträgeraufnahmeposition (220) auf dem Eisenbahnwaggon (110) , und
Lösen des Selbstlademechanismus (220) von dem Lastträger (100),
Sichern des Lastträgers (100) in Querrichtung in Bezug auf den Eisenbahnwaggon (110),
Entriegeln der Nebenrahmensicherungseinrichtungen (150),
Schieben des Nebenrahmens (130) mit dem Selbstlademechanismus (220) in den eingefahrenen Zustand (B), und
Verriegeln der Nebenrahmensicherungseinrichtuhgen (150).

## Revendications

1. Porte-charge du type à transroulage (100) comprenant une structure de transport de charge (20) et un châssis (120) avec un moyen de préhension (50) à l'extrémité avant, le moyen de préhension (50) et le châssis (120) étant conçus pour permettre un chargement du porte-charge (100) avec un véhicule à chargement autonome comprenant un moyen de fixation de sous-châssis (150) destiné à fixer le sous-châssis (130) par rapport au châssis (120) et à la structure de transport de charge (20), dans au moins un état déployé (A) et un état complètement rétracté (B), **caractérisé en ce que** le moyen de préhension (50) est disposé sur un sous-châssis (130) qui peut s'étendre par rapport à l'extrémité avant de la structure de transport de charge (20).

2. Porte-charge (100) selon la revendication 1, **caractérisé en ce que** la longueur totale du porte-charge (100), le sous-châssis étant dans l'état déployé (A), est dans une plage qui permet que le porte-charge (100) soit manipulé par des véhicules à chargement autonome de longueur normale et dépassant la largeur maximum pour un transport par chemin de fer, et la longueur totale du porte-charge (100), le sous-châssis étant dans l'état rétracté (B), est inférieure ou égale à la largeur maximum pour un transport par chemin de fer.

3. Procédé de chargement par transfert d'un porte-charge (100) du type à transroulage selon la revendication 2, depuis un véhicule à chargement autonome (200) vers un wagon de chemin de fer (110), comprenant les étapes consistant à :
positionner le véhicule à chargement autonome (200), transportant un porte-charge (100) du type à transroulage, dans une direction transversale par rapport au wagon de chemin de fer (110), et l'extrémité arrière du véhicule étant adjacente à une position de réception de porte-charge vide (210) sur le wagon de chemin de fer (110),
pousser, avec le mécanisme de chargement autonome (220) du véhicule (200), le porte-charge (100) depuis le véhicule à chargement autonome (200) vers la position de réception de porte-charge (220) sur le wagon de chemin de fer (110), et
libérer le mécanisme de chargement autonome (220) du porte-charge (100),
fixer le porte-charge (100) dans la direction transversale par rapport au wagon de chemin de fer (110),
déverrouiller le moyen de fixation de sous-châssis (150),
pousser, avec le mécanisme de chargement autonome (220), le sous-châssis (130) vers l'état rétracté (B), et
verrouiller le moyen de fixation de sous-châssis (150).
